# EUROPEAN PATENT APPLICATION

(11) **EP 0 763 755 A2**
(43) Date of publication of application: **19.03.1997**
(21) Application number: 96420289.9
(22) Date of filing: 09.09.1996
(51) Int. Cl.: G02B 3/00, G02B 27/22

(54) **Apparatus and method for measuring alignment in lenticular media**

(30) Priority: 15.09.1995 US 3840; 06.12.1995 US 567827
(71) Applicant: EASTMAN KODAK COMPANY, Rochester, New York 14650-2201 (US)
(72) Inventor: Young, Richard Dean, Eastman Kodak Company, Rochester, New York 14650-2201 (US)
(74) Representative: Buff, Michel

(57) **Abstract**

An apparatus (**10**) for measuring the location of lenticules (**24**) in lenticular media (**14**) having an encoded portion (**14**) located adjacent to the lenticules (**24**) comprises a light source (**18**) for illuminating the encoded portion (**12**). A sensor (**20**) is provided for receiving light referred and then transmitted by the encoded portion (**12**) that corresponds to the precise location of the encoded portion (**12**). Moreover, a processing means connecting the sensor (**20**) is provided for analyzing the signal so as to enable a precise location of the lenticules (**24**).

## Description

The present invention relates generally to an apparatus and method for aligning lenticular material or media. More particularly, the invention is concerned with an apparatus and method for determining and measuring the location of an encoded lenticular pattern adjacent to lenticules in the lenticular media so that the precise location of the lenticules can be easily and automatically determined.

Sheets of optically transparent material with a periodic lenticular pattern formed in its surface are used for producing 3-dimensional photographic depth visualization effects and minor animation effects in depth imaging articles. These imaging effects are best achieved under the proper viewing conditions of lenticular material or media such as the media described in US patent application 08/567,790, that is precisely aligned and can, therefore, be assembled to a specially designed companion sheet. Alignment of one or more elements, such as the lenticular media, of depth imaging articles, and the like, are necessary because when improperly assembled only marginal quality depth visualization effects and minor animation effects results. When properly aligned, on the other hand, the imaging article is able to produce far more efficient and higher quality 3-D and animation visualizations.

Current techniques for assembling depth imaging articles involve manually aligning an element of the depth imaging system, such as the lenticules within the lenticular media relative to a designated companion sheet. The manual alignment approach makes use of the imaging effects and interaction that can be visualized when a lenticular media is in direct contact with, for example, a registration feature of a film sheet. Accordingly, it is appreciated that the manual alignment approach has undesirable shortcomings including its time consuming nature; and, it presents a high risk of human error with regard to positioning of critical imaging elements when very precise alignment is demanded. Moreover, the sheer complexity of manually aligning one or more of the imaging elements without the assistance of predetermined intrinsic features associated with one or more of the elements substantially frustrates the manual approach, and therefore diminishes its utility as a viable approach for achieving fast and efficient depth imaging effects.

US-A-5,424,553 describes an optical technique for determining when lenticules within a material are properly aligned for printing applications. This technique requires the position adjustment of the lenticular material during the location measurement process in order to determine nominal placement.

Accordingly, there persists a need for an apparatus that can be used for precisely locating lenticular media for fully automatic high volume depth imaging systems.

It is, therefore, an object of this invention to provide an apparatus for measuring the location of lenticules in lenticular material or media which does not depend upon position adjustment of the lenticular media to determine its location.

It is a feature of the system of the invention that a processing means is provided for analyzing light intensity signals from the encoded portion of the lenticular material or media which corresponds to its location and which further enables the location of the lenticules in the media to be determined.

It is an advantage of the present invention that when it is desired to locate the main portion or lenticules of the lenticular media, the encoded portion is located and the location of the main portion is determined therefrom over a large lateral displacement range of media.

To accomplish these and other objects of the invention, there is provided, in one aspect of the invention, an apparatus for precisely measuring the location of a first portion in a material or media having adjacent first and second portions. The apparatus comprises a light source for illuminating the first portion and at least one sensor for receiving light from the illuminated first portion. The light refracted by the first portion generates a signal corresponding to the location of the first portion. Further, a processing means is provided for analyzing the signal and for determining the precise location of the first portion in the media.

In another aspect of the invention, a vision measurement system for precisely measuring the location of an encoded portion in lenticular media is provided comprising a light source, at least one sensor and a processing means, all as described above.

In yet another aspect of the invention, a method for determining the location of an encoded portion within lenticular material or media comprising adjacent encoded and main portions, comprises the steps of providing the apparatus, as described above. Further, the lenticular media is illuminated with the light source so as to illuminate at least the encoded portion. The sensor means are activated so as to receive light from the illuminated encoded portion. The light generates a signal comprising spatially dependent data corresponding to the precise location of the encoded portion. After the signal is generated, it is then processed so as to determine the location of the encoded portion.

The foregoing as well as other objects, features and advantages of this invention will become more apparent from the appended Figures, wherein like reference numerals denote like elements, and wherein:
Figure 1 is a diagrammatic view of the apparatus of the invention;
Figures 2 - 4 are perspective views of single planar region features;
Figures 5-7 are perspective views of lenticule pair bounded by planar regions;
Figures 8-10 are perspective views of spatial encoded pattern of multiple planar regions shown in perspective view; and

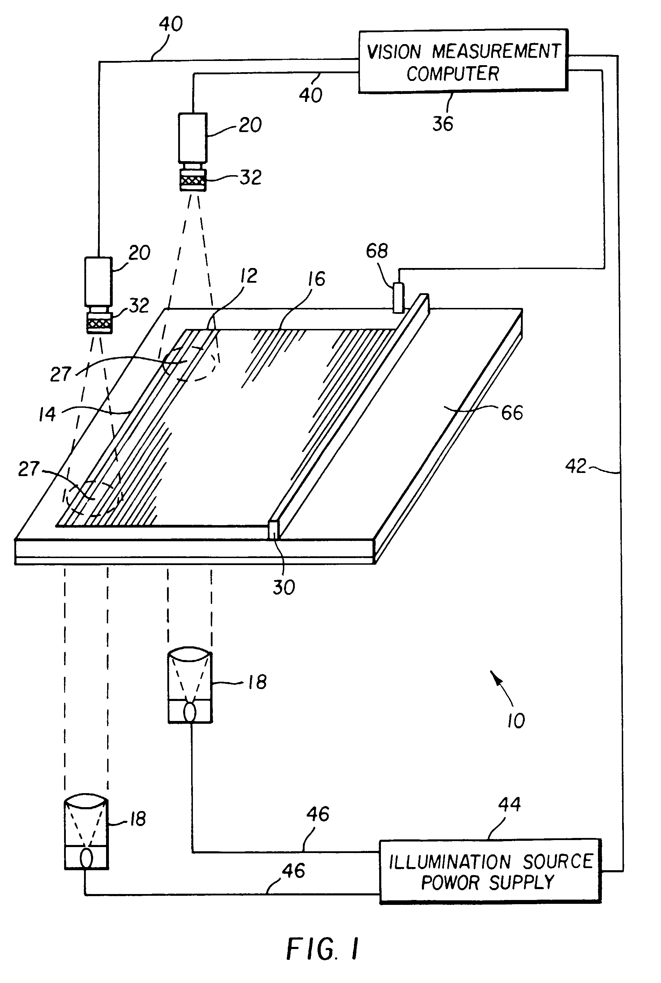

Turning now to the drawings, and in particular to Fig. 1, the apparatus **10** in accordance with the principles of the invention is illustrated. Broadly defined, the apparatus, also referred to as vision measurement system, **10**, for precisely measuring the location of a first portion or encoded portion, **12**, in a lenticular material, or media, **14**, having adjacent first and second portions **12, 16** comprises a light source **18** for illuminating at least the first portion **12** of the lenticular media **14**. Further, at least one sensor means, preferably a first and second camera (described below) **20**, is provided for receiving light from the illuminated first portion **12**. Moreover, a processing means, preferably a vision computer, **36**, is included in this embodiment for analyzing the analog signal **46** from the light source and for determining the location of the first portion **12**. The signal **46** comprises spatially dependent data corresponding to the location of the first portion **12** of the lenticular media **14**.

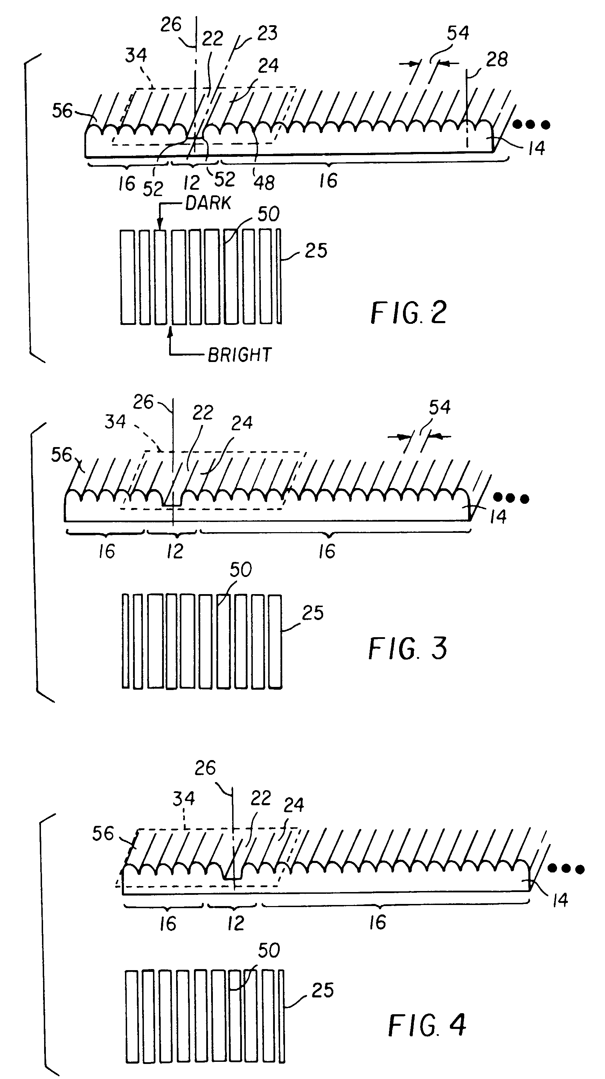

Figs. 2-4 illustrate important features of the invention including a singular planar region **22** of encoded portion **12** bounded by adjacent lenticules **24** in lenticular media **14**. According to Fig. 2, an image **25** of media **14** is shown substantially aligned, that is, centered relative to the centerline **26** of encoded portion **12**. In Fig. 3, on the other hand, the image **25** of media **14** is shown misaligned relative to centerline **26** of the encoded portion **12**. Likewise, Fig. 4 shows image **25** misaligned to the right of the centerline **26** of encoded portion **12**. Thus, the position measurement of encoded portion **12** can be determined precisely by vision measurement system **10** of the present invention taking into account the above findings. In general, the analysis of media **14** with system **10** takes into account the location of centerline **26** of the encoded portion **12** and centerline **28** of the lenticules **24**. If centerline **26** is not only parallel but also preferably on centerline pitch with main portion **16** having lenticules **24**, that is, equal to the spacing of the other lenticule features, then the position of all the centerlines **28** of lenticules **24** of main portion **16** can be precisely determined relative to the centerline **26** of the encoded portion **12** as an integer multiple of lenticular width **54**, with multiplier n equal to the n^{th} lenticule from encoded portion **12**.

Referring again to Fig. 1, the vision measurement system **10** can also be used to perform accurate location measurements of skew and offset of the lenticule **24** by viewing the region encompassing the planar region **22** feature and adjacent lenticules **24**. For two cameras each with an x, y pixel coordinate system and camera center **27** denoted as x_{c}, y_{c}, skew can be defined as the angle formed by line created by connecting the camera centers with a lengthwise axis **23** of encoded portion at centerline 26. The offset can be defined as the perpendicular distance from a line connecting camera centers **27** starting at coordinate x_{c}, y_{c} of first camera **20** to the encoded portion's lengthwise axis **23** at centerline **26**.

According to Fig. 1, the lenticular material or media **14** may be manually placed against the reference edge **30** of support means, or platen, **66**, or it may be automatically introduced to the vision system **10** by a pick and place device (not shown), such as a robotic actuation arm. The automatic method of introducing the media **14** to system **10** so as to eliminate human error factors is preferred. As shown in Fig. 1, a plurality of sensors, also referred to as imaging cameras, **20**, are cooperatively mounted in system **10** to provide location data of encoded portion **12** of media **14**. Preferably, at least two electronic cameras **20** (although one may suffice), with preferably 2-dimensional area array CCD sensor geometry, such as, Sony Model XC75, are positioned above the lenticular media **14** for viewing the planar region **22** of encoded portion **12.** For greater accuracy of measurement, a spacing of at least 20 cm (8 inches) between first and second cameras **20** is preferred. First and second cameras **20** are both configured with a high quality imaging lens **32,** such as Nikkor enlarging lens, to minimize optical aberrations and geometric distortions. Using a calibration target (not shown) with precisely located crosshair fiducial marks of known dimension which spans both cameras **20**, the spatial coincidence of the cameras' centers **27** (Fig. 1) can be precisely determined by a vector correlation approach and the initial placement of cameras **20** adjusted accordingly to establish their centers **27** at a known distance from each other. According to Fig. 2, for both first and second cameras **20**, the field of view **34** is preferably setup for high magnification so that at least five lenticule pitches are imaged. In this way, intensity measurements from light refracted from encoded portion **12** can be made to high accuracy to locate the planar region **22** of encoded portion **12**. The use of first and second cameras **20**, with one viewing the planar region, or absent lenticule, **22**, at a point spaced apart from the other, and with both cameras **20** viewing the planar region **22**, permits the skewness measurement to be more accurately determined by the vision computer **36** over the extended length of the media **14**. Alternatively, skilled artisans would appreciate that other position sensing means could be deployed including arrays of photodiodes or lateral effect sensors. The illumination for the cameras **20** are provided by preferably collimated light sources **18**. A light source comprised of components including tungsten lamps, pinhole aperture, condensor lens, and component holders manufactured by Spindler & Hoyer is preferred. The light sources **18** are configured in a transmissive mode through the lenticular media **14**. Those skilled in the art will also appreciate that the illumination can be provided by other sources, such as, fiber illuminators, LED's, and lasers. Moreover, a skilled artisan can appreciate that vision system **10** of the invention has applicability to lenticular material, or media, **14**, with single and patterned variant conic sectioned lenticules, of the type described in US patent application No. 08/567,790.

Referring still to Fig. 1, the acquired image from each camera **20** is transmitted as an analog video signal **40** to the analog to digital converter (not shown) and frame buffer memory storage(not shown) residing within vision measurement computer **36**. The vision computer manufactured by Applied Intelligent Systems Inc. (AISI) is preferred, although there are perhaps others that are equally well suited for this function. The vision computer **36** also serves to control the illumination level of the light sources **38** by transmitting control signal **42** to the programmable light source power supply **44**, whereupon DC power supply **44** sends appropriate analog signal **46** to each light source **18** supporting a respective camera **20**, as shown in Fig. 1. Once images are acquired from both cameras **20**, the vision computer **36** processes and analyzes the stored images to derive the measurement location information pertaining to lenticule media **14**. The use of AISI's parallel processing architecture permits using morphological image processing techniques to robustly segment features of interest at fast processing speeds.

In Fig. 2, the centerline **26** of planar region **22** on lenticular media can be determined by various methods, including calculating the location of centerline **26** according to its neighboring lenticule attribute positions or using the imaged features of the planar region **22** itself to determine location as can be done by template correlated approaches. Backlighting the media **14** with collimated light sources **18** to illuminate defined modified cusp points **52** of the adjacent lenticules **24** to the planar region **22** as thin bright lines is preferred. Then these cusp lines **50** are used as reference points for calculating the centerline **26** of the planar region **22** to subpixel accuracies. The collimated backlight approach is preferred over reflective illumination configurations due to the minimized alignment sensitivity for the backlight and insensitivity to specular highlights shifting on lenticular surface. The illumination level is controlled by the vision computer **36** such that the cusp lines **50** of interest are maintained as high fidelity features which are not saturated with regard to intensity. This control is performed by a statistical analysis of acquired image contrast. The cusp points **48** are the intersection of adjacent lenticules **24** where the minima is formed by the meeting of the two conic sections. As depicted in Fig. 2, due to the optical refractive properties of the modified cusp points **52** associated with the boundary of a lenticule **24** to planar region **22** being different than a normal lenticule **24** to lenticule **24** cusp point **48** on the media **14**, the corresponding imaged cusp lines can be distinguished. The cusp lines **50** imaged from modified cusps points **52** are of less intensity extent than the predominant bright cusp lines **50** for all normal lenticule to lenticule cusp points **48**. Furthermore, using planar region **22** of a different width than standard lenticule width **54** permits further imaging distinction of the cusp lines **50** immediately adjacent to planar region **12**.

For any of these bright cusp lines, various processing techniques, such as, finite difference and zero crossing detectors of the second gradient, can be employed to determine the edge locations of the finite width line and then subsequently determine the center of each cusp line **50**. A least squares line fit modeling of the cusp line **50** center can further enhance the positioning accuracy as measured by the vision computer **36**. With the cusp line **50** locations known associated with the planar region **22**, the desired center position of the planar region that is on pitch with the periodic lenticules **24** can be determined by a basic midpoint math calculation between the cusp lines **50**. Also, the calculated midpoints of other pairwise cusp lines **50** for lenticules **24** further distanced but symmetric about the planar region can be used to increase measurement location repeatability of planar region centerline **26**.

Referring again to Figures 2-4, as indicated above, several representations of a collimated backlit lenticular material, or media, **14**, under various lateral displacement shift (alignment) conditions. According Figs. 2-4, lenticule cusp points **48** in the corresponding image are highlighted as bright cusp lines **50** and the planar region **22** as a differentiated intensity region in the acquired image. Although not illustrated in any of the drawings, the peak **56** of each lenticule **24** as well as the planar region **22** may image as broad bright bands depending on the incident angle of the illumination. The cusp lines **50** of interest, however, can still be delineated and measured by their limited widthwise extent. For the case where excessive banding occurs in the planar region **22**, and the modified cusp lines **52** are no longer distinct, other pairwise cusp lines **50** which are symmetric about the planar region **22** can be used to calculate centerline **26**. Due to the improved accuracy of location measurements from the well defined unsaturated intensity edges of the cusp line **50** features, location measurements of the cusp lines **50** and **52** rather than the wider bands within the lenticule peaks **56** and planar regions are preferred. Thus, lateral shifts of the media **14** causes a corresponding shift of modified cusp lines **52** in the images, and the centerline **26** of planar region **22** can be calculated as previously described. Banding effects can be reduced by tilting the light source **18** with respect to vertical axis of camera **20**.

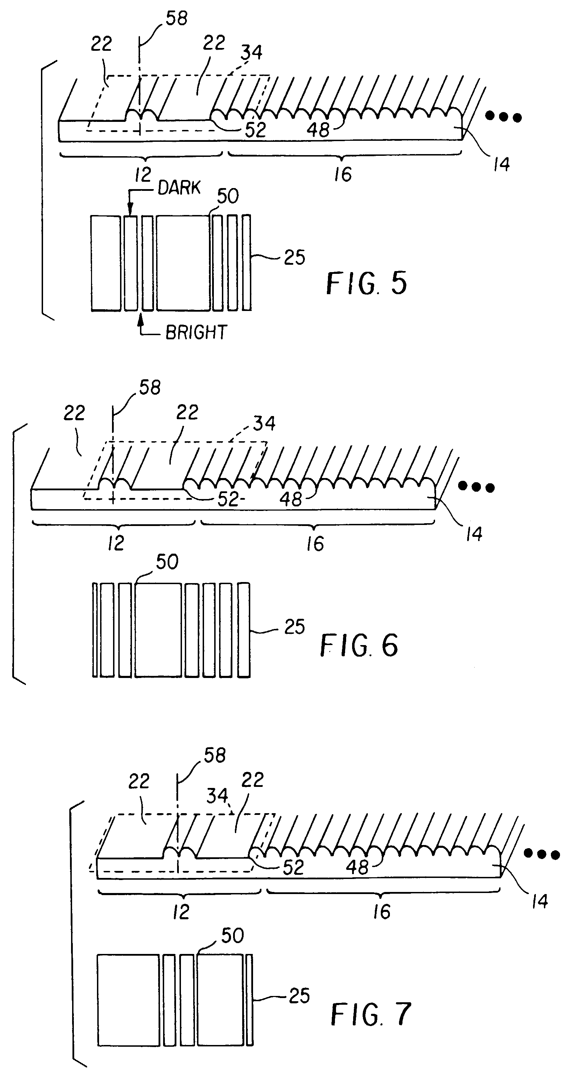

In Figs. 5-7, alternative complementary configurations of encoded portion 12 using a single pair of lenticules **24** bounded by planar regions **22** is depicted. In these configurations, the isolated lenticule pair centerline **58**, as defined by the cusp point **48**, is the desired datum of interest and is offset by a half lenticule pitch. The corresponding image shows the lenticule pair center **58** imaging as a bright cusp line **50** with the modified cusp points **52** imaging as less intense bright cusp lines **50**.

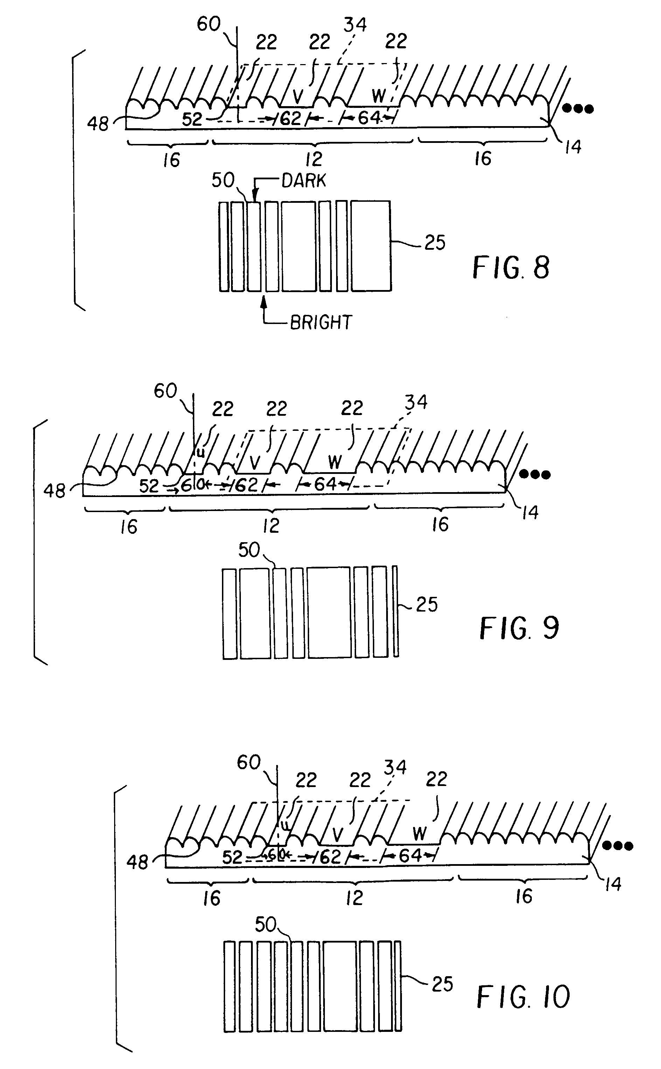

Referring to Figs. 8-10, if one uses a pattern of planar region **22** zones on the media **14**, the sheet's lateral position dynamic range of locating features, such as centerlines **26**, is improved by the expanded encoded portion **12**. The advantages of using a series or pattern of planar regions **22** amongst the periodic array of lenticules **24** are many. First, a high optical magnification with the camera field of view **34** preferably encompassing a plurality of lenticule pitches (preferably at least five) is recommended to maintain high measurement accuracy for the aforementioned vision system. This arrangement will still enable the cameras to view the significant portions of various encoded patterns. Furthermore, due to a unique pattern encoded in the media **14** as either planar regions **22** of varying widths ( that is one, two, three , and so forth lenticule widths wide), multiple single width planar regions **22** in a pattern unique to that lateral spatial position on the media **14**, or a combination thereof, the analysis of the images acquired from the firs and second cameras **20** provides absolute location and precise skewness measurements over a larger displacement range of lenticular media **14**. Further according to Figures 8-10, if the displacement of the lenticular media **14** is large such that the lenticular datum of interest indicated as "U" **60** is beyond the cameras' field of view **34**, precise positioning of the media **14** can still be achieved by viewing the region "V" **62** or "W" **64** of the encoded portion **12** presented to the camera **20** and knowing the "V" **62** or "W" **64** pattern's absolute encoded location relative to the lenticule datum **60** outside the camera's view **34**. Another advantage of encoding the lenticular media **14** is that a greater use of the main portion **16** can be achieved by including a series of planar regions **12** having varying widths (that is, smaller or larger than nominal) and corresponding varying widths of adjacent lenticule **24** within the encoded portion **12**.

The preferred sequence of operation for the described lenticular media alignment apparatus **10** is discussed below. The operation is described for a media **14** with a singular planar region **22** as the encoded portion **12**; however, the method with minor modification can be applied to other lenticular encoded formats as well. Initially, during camera **20** setup, a calibration and alignment procedure is performed for both cameras **20** which defines the desired nominal centerline location of either the lenticule **24** adjoining encoded portion **12** or the encoded portion **12** itself with respect to each camera's **20** local x-y pixel coordinate system. This defines not only the nominal location of centerline **26** of encoded portion, but the nominal angular orientation of the centerline **26** required. The alignment procedure also permits the precise mechanical setup of each camera **20** such that they are parallel to each other and on known centers **27**, with the distance between the alignment targets' centerpoints well defined due to the precision alignment target (not shown) spanning both cameras **20**.

During normal operations of apparatus **10**, the lenticular media **14** is coarsely presented on the platen **66** using a pick and place device (not shown), and pushed against the platen's reference edge **30** so that the media's encoded portion **12** will be encompassed within each camera's field of view **34** with the lengthwise axis of any lenticule **24** somewhat parallel to the camera's y-axis. The media **14** is then held on the platen **66** with a clamping mechanism (not shown). The clamping mechanism is actuated by, for example, a photosensor **68** having the capability to sense that the media **14** is properly positioned against reference edge **30** of the platen **66**. The procedure below describes the method for precisely locating the lenticular media **14** position with regard to offset and skew prior to any critical assembly or interfacing processes involving lenticular media **14**.

To accurately determine the location of the lenticular media **14**, the light intensity level of light sources **18** are set for nominal setting and then first camera **20** acquires a gray scale image of the encoded portion **12** of lenticular media **14**. This is the first step of the processing algorithm executed by the vision computer **36**. An intensity histogram modal analysis in a selected region of interest is performed to determine if adequate cusp line **50** feature brightness is established. If not, the light intensity level is adjusted by the vision computer **36** using a linear mapped lookup table for intensity and another image is acquired at the corrected light level setting. The adjustment of the light intensity level could be based for example on the contrast of the image sensed. The image is stored in a frame buffer (not shown) within vision computer **36** and designated as the original image. To accommodate any media **20** quality shortcomings, such as roughness in cusp lines **50**, pre-processing steps are performed to a frame buffer copy of the original gray scale image. By first applying a gray scale morphological closing with a vertically dominant structuring element orientation, any gaps in the imaged cusp lines **50** are filled. The next step of applying a morphological opening residual with horizontally oriented structuring element of widthwise dimension just greater than the cusp line **50** width in pixels, eliminates any broad white bands in the acquired image. At this stage, after the residual operation, the resultant gray scale image has only bright cusp line **50** features remaining with a background intensity level of zero gray level.

The next steps in the processing are to perform binary image operations to determine the coarse location of cusp lines **50**. Edge finding operations in the binary image state are performed more rapidly by vision computer **36** in coarsely locating the cusp lines **50** than can be realized by applying full image width gray scale ruler gauges to the original gray scale image. A fixed threshold level is applied to the resultant gray scale residual image to generate a binary image of cusp line **50** features, represented as ones in the foreground. To remove any binary spot noise in the image not associated with straight cusp lines **50**, such as may be introduced by contaminates, a binary morphological opening with vertically dominant structuring element orientation can then be applied. A binary skeletonization of the image is then performed to reduce cusp lines **50** to single pixel width. A vertical projection of the skeletonized image is then performed down each column of the image to a lower row designated as projection row in the image. A pixel in the projection row will equal one only if within its associated column of pixels, at least one pixel had a value of one. The locations of the cusp lines **50** are determined by reading the binary pixel values of projection row. The coarse locations of cusp lines **50** are then stored in memory to be utilized for locating subsequent placement of higher precision measurement gauging methods. Furthermore, the coarse location of the encoded portion **12** as the center pixel associated with the largest continuous span of zeros in the projection row is stored in memory.

After the binary processing is complete, higher precision gray scale subpixelation gauges designated as rulers are centered about the cusp lines **50** in the saved original gray scale image at previously determined coarse pixel locations from projection row. These gray scale rulers centered about the cusp lines **50** are of very short length extent to optimize processing cycle time. For each cusp line **50**, many rulers are placed about the cusp line **50** at different locations along the cusp line's lengthwise extent. Each individual ruler determines by a zero-crossing of the second finite difference the precise location of leading and trailing edge of the cusp line **50** as each pixel associated with the ruler's graphical line overlay is analyzed. This ruler technique as applied to the lenticules cusp lines **50** provides better than one-fifth subpixelation accuracy in locating edges, and a precision midpoint is calculated from the edge pair locations. For a given cusp line **50**, the calculated midpoints along its length are used in a best line model fit to further increase the locating precision of the cusp line **50**. A parameter empirically derived determines if any individual data midpoint departs too much from the best line fit. If so, the individual data midpoint is removed as an outlier and the best line model fit for a cusp line's center is repeated using the remaining midpoints. At this stage, for each cusp line **50** a best line model fit is determined such that for any given row in the image, corresponding center locations of cusp lines **50** crossing the row can be very precisely calculated. It is preferred to use the center most row y_{c} in image to determine cusp line **50** position.

Based on the previous information determined during the analysis of the binary projection row, the coarse location of encoded region **12** is determined. Using the two cusp lines **50** symmetrically located about the coarse location of encoded region **12**, for any given row a precise center location of the encoded region **12** can be determined by calculating the midpoint between the two cusp line **50** centers as determined by their best line model fit crossing center most row. Alternatively, if one uses the two cusp lines **50** on the right (or to the left) of the encoded region **12** location determined by the binary projection, the precise center **28** of a lenticule feature itself of known offset distance from the encoded region centerline **26** is determined by a calculated midpoint. The selected midpoint calculated at a given image row, preferably the center row in the image, is stored for subsequent offset calculation.

The above processing sequence described for first camera **20** is then repeated for second camera **20**. At the completion of the operational sequence for the second camera **20**, precise location of encoded portion **12** for a given center row y_{c} in the image is known for that camera **20** position. Using the location of centerline **26** of the encoded portion **12** from both first and second cameras **20**, and knowing a predetermined physical distance between centers **27** of both first and second cameras **20**, the skew of the lenticular media **14** can be precisely calculated. By using the difference between the location of centerline **26**, as determined by first camera **20,** and the nominal location of centerline **26**, as viewed by first camera **20** during alignment procedure, the offset distance from nominal can be determined for lenticular media **14**. Thus, the location of lenticular media **14** in terms of skew and offset can therefore be precisely determined for subsequent critical assembly or interfacing processes.

## Claims

1. An apparatus for precisely measuring the location of a first portion in a media having adjacent first (12) and second (16) portions, the apparatus comprising:
a light source (18)for illuminating at least the first portion;
at least one sensor (20) for receiving light from the illuminated first portion, the sensor producing a signal corresponding to the first portion;
a processing means (36) for analyzing the signal and for determining the location of the first portion, the signal comprising spatially dependent data corresponding to the location of the first portion.

2. The apparatus recited in Claim 1 wherein the location of the first portion enables a precise determination of the location of the second portion.

3. The apparatus recited in Claims 1 or 2, wherein the light source is a collimated tungsten halogen source configured for transmissive illumination.

4. The system recited in any of the preceding Claims wherein the at least one sensor is an electronic CCD camera device with imaging lens.

5. The apparatus recited in any of the preceding Claims wherein the processing means comprises a vision computer having precision measurement algorithms for locating the positions of lines and edges characteristic of the first and second portion of the media.

6. A method for determining the location of a first portion within lenticular media comprising adjacent first and second portions, the method comprising the steps of:
providing the apparatus recited in any of the preceding claims ;
illuminating the lenticular media with the light source so as to illuminate at least the first portion;
activating the sensor means so as to receive light from the illuminated first portion, the light generating a signal comprising spatially dependent data corresponding to the precise location of the first portion; and,
processing the signal so as to determine the location of the first portion.

7. The method as claimed in Claim 6 wherein the processing step comprises the step of locating a first centerline of the first portion and then determining a second centerline of the second portion, the second centerline defining the location of the second portion.

8. The method as claimed in Claim 6 or 7 further comprising the step of comparing the measured location of the second portion with an expected location of the second portion.
